# EUROPÄISCHE PATENTSCHRIFT

(11) **EP 1 156 097 B1**
(45) Veröffentlichungstag und Bekanntmachung des Hinweises auf die Patenterteilung: **15.10.2003**
(21) Anmeldenummer: 01110743.0
(22) Anmeldetag: 03.05.2001
(51) Int. Cl.: C09K 5/06, F28D 20/02

(54) **Verfahren zur Herstellung eines Speicherverbundes zur Speicherung von Wärme oder Kälte**
Process for the preparation of an accumulating composite for accumulation of heat or cold
Procédé de production d'un composite accumulateur pour l'accumulation de chaleur ou de froid

(30) Priorität: 15.05.2000 DE 10023572
(43) Veröffentlichungstag der Anmeldung: 21.11.2001
(73) Patentinhaber: MERCK PATENT GmbH, 64293 Darmstadt (DE)
(72) Erfinder: Neuschütz, Mark, Dr., 64285 Darmstadt (DE); Niemann, Marlies, 64572 Büttelborn (DE)

(56) Entgegenhaltungen:
- DE-A- 19 630 073

## Beschreibung

Die vorliegende Erfindung betrifft ein Verfahren zur Herstellung eines Speicherverbundes zur Speicherung von Wärme oder Kälte in Form von Phasenumwandlungswärme aus einer Matrix aus gepresstem, expandiertem Graphit und darin eingebrachtem Phasenwechselmaterial (PCM) durch Vakuumimprägnierung des PCM in die Matrix.

Die DE 196 30 073 A1 beschreibt einen Speicherverbund zur Speicherung von Wärme oder Kälte und dessen Herstellung. Der Verbund besteht dabei aus einer inerten Graphitmatrix mit einer Raumdichte von mehr als 75 g/l, die im Vakuum mit einem fest-flüssig-Phasenwechselmaterial (PCM) imprägniert worden ist. Die Graphitmatrix weist eine hohe Porosität auf und erlaubt eine hohe Beladung an PCM bis maximal 90 Vol.-%, ohne dass sie durch Volumenänderung beim Phasenübergang zerstört wird. Eine hohe Beladung des Speicherverbundes an PCM ist deshalb wichtig, weil so eine hohe Energiedichte erreicht werden kann. Ein Vorteil hierbei ist die Verwendung von Graphit als Matrixmaterial, der naturgemäß eine hohe Wärmeleitfähigkeit aufweist und aufgrund seiner weitgehenden chemischen Inertheit annähernd keine Beschränkung für das PCM vorschreibt.

Der in DE 196 30 073 A1 beschriebene Speicherverbund weist in bezug auf sein Herstellungsverfahren (Vakuumimprägnierung) allerdings einige relevante Nachteile auf. Das Verfahren ist dadurch gekennzeichnet, dass vor der Imprägnierung die aus gepresstem Graphitexpandat hergestellte Matrix auf einen Druck kleiner als 10 mbar, vorzugsweise zwischen 10 und 40 Kelvin über den Schmelzpunkt, maximal aber bis zur Verdämpfungstemperatur des PCM, erwärmt wird. Durch Öffnen eines Ventils zum PCM-Behälter wird das dann im Überschuss vorhandene geschmolzene PCM in die Graphitmatrix eingesaugt. Anschließend wird der Speicherverbund vorzugsweise auf unter Zimmertemperatur abgekühlt, um ein Ausgasen des PCM bis zum Schließen des Speicherbehälters zu vermindern. Durch die Verwendung von zwei separaten Gefäßen für die Graphitmatrix und das PCM gestaltet sich der apparative als auch operative Aufbau auch in Hinsicht auf Temperatur- und Druckkontrolle sehr aufwendig.

Aufgabe der Erfindung war es demnach, ein verbessertes Verfahren zur Vakuumimprägnierung einer gepressten, expandierten Graphitmatrix mit einem fest-flüssig-Phasenwechselmaterial (PCM) unter Bereitstellung eines Speicherverbundes mit hoher Elastizität/Stabilität, hoher Wärmeleitfähigkeit, hoher Energiedichte durch hohe PCM-Beladung und Komplementartität mit einer großen Anzahl an PCM zur Verfügung zu stellen, das in seiner Durchführung gegenüber dem Stand der Technik stark vereinfacht und damit auch erheblich kostengünstiger ist.

Diese Aufgabe wird erfindungsgemäß durch das Verfahren zur Vakuumimprägnierung gemäß Anspruch 1 gelöst. Vorteilhafte bzw. bevorzugte Ausführungsformen des Anmeldungsgegenstandes sind in den Unteransprüchen angegeben.

Gegenstand der Erfindung ist somit ein Verfahren zur Herstellung eines Speicherverbundes zur Speicherung von Wärme oder Kälte aus einer Matrix aus gepresstem, expandiertem Graphit und darin eingebrachtem Phasenwechselmaterial (PCM) durch Vakuumimprägnierung des PCM in die Matrix, das dadurch gekennzeichnet ist, das die Matrix bei Normaldruck unter teilweise oder vollständiger Eintauchung in einer PCM-Schmelze innerhalb eines Imprägniergefäßes fixiert wird und das Imprägnierungsgefäß anschließend evakuiert wird, bis die gewünschte Beladung der Matrix mit dem PCM erreicht ist.

Dabei wird das Imprägnierungsgefäß bevorzugt auf einen Druck evakuiert, der dem Dampfdruck der PCM-Schmelze entspricht.

Es hat sich gezeigt, dass die Größe des Imprägnierungsgefäßes bevorzugt derartig gewählt wird, dass dessen verbleibender Gasraum nach der Befüllung etwa dem Volumen der PCM-Schmelze entspricht.

Überraschenderweise wurde festgestellt, dass das erfindungsgemäße Verfahren der Vakuumimprägnierung einer Graphitmatrix mit PCM unter Verwendung nur eines Gefäßes, nämlich dem Imprägnierungsgefäß, d. h. bei direktem PCM-Matrix-Kontakt vor der Evakuierung, keinerlei Nachteile in Bezug auf die Produktqualität der resultierenden Speicherverbunde, z. B. durch gehemmte oder verschlechterte Entgasung der porösen Graphitmatrix, bedingt und zudem der apparative Aufwand wesentlich vereinfacht wird. Es ist kein Erwärmen des PCM in einem externen Gefäß, d. h. keine getrennte Temperaturregelung, notwendig, vielmehr wird die Gesamtapparatur, meist in Form eines Exsikkators, einer Wärmequelle, z. B. einem Trockenschrank, ausgesetzt. Dadurch entfällt auch die aufwendige Regelung der Zudosierung in Kombination mit der Druckregelung (Evakuierung) über verschiedene Ventile. Das Imprägnierungsgefäß wird erfindungsgemäß bevorzugt auf einen Druck evaluiert, bis der Siedepunkt der PCM-Schmelze erreicht ist, und dann über ein Ventil verschlossen. Dadurch ist ein Abkühlen des Speicherverbundes auf Zimmertemperatur, wie es im Stand der Technik beschrieben wird, um ein Ausgasen des PCM bis zum Schließen des Speicherbehälters zu vermindern, unnötig. Die einzige Regelung, die erfindungsgemäß gegebenenfalls bei Verwendung von Salzhydraten als PCM vorgenommen werden muss, betrifft das vorherige Zudosieren einer entsprechenden Wassermenge, die den Wasserverlust durch Verdampfung bei Verwendung eines sehr großen Gasraums ausgleicht.

Das erfindungsgemäße Verfahren zur Vakuumimprägnierung kann solange durchgeführt werden, bis die Restporosität des Speicherverbundes etwa 5 Vol.-% beträgt. Diese Restporosität kann nach einer Imprägnierdauer von bis zu etwa 5 Tagen, vorzugsweise von etwa bis zu 4 Tagen, erreicht werden. Die Graphitmatrix weist geeigneterweise eine Dichte von 75 bis 1.500 g/l, vorzugsweise 75 bis 300 g/l, insbesondere bevorzugt etwa 200 g/l, auf.

Durch das erfindungsgemäße Verfahren werden Speicherverbunde erhalten, die sich durch eine hohe PCM-Beladung und damit durch eine hohe Energiedichte, eine hohe Elastizität bzw. Stabilität und durch eine hohe Wärmeleitfähigkeit auszeichnen. Die ausgezeichnete Stabilität trotz der hohen Beladung (Restporosität nur 5 Vol.-%) wird durch die Dichte von >75 g/l der Graphitmatrix eine große Toleranz der Matrix gegenüber Expansion des PCM in den Poren, was sich in einer hohen Elastizität des Speicherverbundes ausdrückt. Diese hohe Elastizität bringt den Vorteil mit sich, dass die Expansion des PCM (z. B. Wasser/Eis 8 %) vollständig intern durch den Verbund aufgefangen werden kann, so dass auf aufwendige Regelungstechnik zum Schutz des Verbundes vor expansionsbedingter Zerstörung verzichtet werden kann.

Das erfindungsgemäße Verfahren umfasst vorzugsweise die Verwendung eines PCM, das einen Phasenübergang fest/flüssig im Temperaturbereich von -25 °C bis 150 °C hat. Ein bevorzugtes PCM stellt dabei Wasser dar.

Andere in dem erfindungsgemäßen Verfahren verwendbare PCM sind die folgenden Komponenten bzw. eutektische oder kongruent schmelzende Gemische aus mindestens zwei der Komponenten ausgewählt aus CaBr₂, CaCl₂·6H₂O, CaCl₂, KF, KCI, KF·4H₂O, LiClO₃ 3H₂O, MgSO₄, MgCl₂, ZnCl₂·2,5H₂O ZnSO₄, Ba(OH)₂, H₂O, SO₃·2H₂O, NaCI, NaF, NaOH, NaOH·3,5H₂O, Na₂HPO₄, Na₂SO₄, Na₂SO₄·10H₂O, NH₄Cl, NH₄H₂PO₄, NH₄HCO₃, NH₄NO₃, NH₄F, (NH₄)₂SO₄, Al(NO₃)₂, Ca(NO₃)₂, Cd(NO₃)₂, KNO₃, LiNO₃, Mg(NO₃)₂, Mg(NO₃)·6H₂O, NaNO₃, Ni(NO₃)₂, Zn(NO₃)₂, Zn(NO₃)₂·6H₂O, Cu(NO₃)₂, Essigsäure, Acetate. Bevorzugt wird als PCM ein eutektisches Gemisch aus LiNO₃ und Mg(NO₃)₂·6H₂O verwendet.

Bei Verwendung von Salzhydraten als PCM stellt die PCM-Schmelze aus der Sicht des wasserfreien Salzes in gewisser Weise eine Lösung des Salzes in seinem Hydratwasser dar.

Die Erfindung wird anhand des nachfolgenden Beispiels näher erläutert.

### Beispiel: Imprägnierung der Graphitmatrix

In einem Vakuumexsikkator im Trockenschrank wurde die expandierte, gepresste Graphitmatrix mit einer Raumdichte von 0,2 g/ml (3 Liter, 0,6 kg) in Form von Platten mit der Abmessung von 12 x 12 x 1 cm vollständig in ca. 6 kg PCM eingetaucht, das aus einem eutektischen Gemisch aus LiNO₃/Mg(NO₃)₂·6H₂O (Dichte 1,6 g/ml, 3,8 Liter Schmelze) bestand. Die Temperatur wurde auf 90 °C erhöht, und der Druck im Vakuumexsikkator wurde langsam bis zum Siedepunkt des PCM erniedrigt. Bis zum Erreichen des Siedepunkts des PCM nach ca. 5 Minuten trat lediglich Gas aus der Matrix aus. Der Hahn des Exsikkators wurde geschlossen um einem Wasserverlust während des Imprägnierungsvorgangs zu vermeiden. Nach einer Imprägnierungsdauer von 3 bis 4 Tagen wurde eine Beladung der Graphitmatrix mit PCM von 85 % gefunden, was bei 10 % Graphitvolumen einer Restporosität von 5 Vol.-% entspricht.

## Patentansprüche

1. Verfahren zur Herstellung eines Speicherverbundes zur Speicherung von Wärme oder Kälte aus einer Matrix aus gepresstem, expandiertem Graphit und darin eingebrachtem Phasenwechselmaterial (PCM) durch Vakuumimprägnierung des PCM in die Matrix, **dadurch gekennzeichnet, dass** die Matrix bei Normaldruck unter teilweiser oder vollständiger Eintauchung in einer PCM-Schmelze innerhalb eines Imprägnierungsgefäßes fixiert wird und das Imprägnierungsgefäß anschließend evakuiert wird, bis die gewünschte Beladung der Matrix mit dem PCM erreicht ist.

2. Verfahren nach Anspruch 1, **dadurch gekennzeichnet, dass** das Imprägnierungsgefäß auf einen Druck evakuiert wird, der dem Dampfdruck der PCM-Schmelze entspricht.

3. Verfahren nach Anspruch 1 und/oder 2, **dadurch gekennzeichnet, dass** ein Imprägnierungsgefäß verwendet wird, dessen verbleibender Gasraum nach der Befüllung etwa dem Volumen der PCM-Schmelze entspricht.

4. Verfahren nach mindestens einem der Ansprüche 1-3, **dadurch gekennzeichnet, dass** die Vakuumimprägnierung solange durchgeführt wird, bis die Restporosität des Speicherverbundes etwa 5 Vol.-% beträgt.

5. Verfahren nach mindestens einem der Ansprüche 1-4, **dadurch gekennzeichnet, dass** die Vakuumimprägnierung über einen Zeitraum von bis zu etwa 5 Tagen vorzugsweise bis zu etwa 4 Tagen, durchgeführt wird.

6. Verfahren nach mindestens einem der Ansprüche 1-5, **dadurch gekennzeichnet, dass** ein PCM verwendet wird, das einen Phasenübergang fest/flüssig im Temperaturbereich von -25 °C bis 150 °C hat.

7. Verfahren nach mindestens einem der Ansprüche 1-6, **dadurch gekennzeichnet, dass** Wasser als PCM verwendet wird.

8. Verfahren nach mindestens einem der Ansprüche 1-5, **dadurch gekennzeichnet, dass** als PCM mindestens eine der folgenden Komponenten oder ein eutektisches oder kongruent schmelzendes Gemisch aus mindestens zwei der folgenden Komponenten verwendet wird.
CaBr₂, CaCl₂·6H₂O, CaCl₂, KF, KCI, KF·4H₂O, LiClO₃ 3H₂O, MgSO₄, MgCl₂, ZnCL₂·2,5H₂O, ZnSO₄, Ba(OH)₂, H₂O, SO₃·2H₂O, NaCl, NaF, NaOH, NaOH·3,5H₂O, Na₂HPO₄, Na₂SO₄, Na₂SO₄·10H₂O, NH₄Cl, NH₄H₂PO₄, NH₄HCO₃, NH₄NO₃, NH₄F, (NH₄)₂SO₄, Al(NO₃)₂, Ca(NO₃)₂, Cd(NO₃)₂, KNO₃, LiNO₃, Mg(NO₃)₂, Mg(NO₃)·6H₂O, NaNO₃, Ni(NO₃)₂, Zₙ(NO₃)₂, Zn(NO₃)₂·6H₂O, Cu(NO₃)₂, Essigsäure, Acetate.

9. Verfahren nach mindestens einem der Ansprüche 1-8, **dadurch gekennzeichnet, dass** als PCM ein eutektisches Gemisch aus LiNO₃ und Mg(NO₃)₂·6H₂O verwendet wird.

10. Verfahren nach mindestens einem der Ansprüche 1-9, **dadurch gekennzeichnet, dass** eine Graphitmatrix mit einer Dichte von 75-1500 g/l, vorzugsweise 75-300 g/l, insbesondere bevorzugt etwa 200 g/l, verwendet wird.

## Claims

1. Process for producing an accumulator composite for accumulating heat or cold from a matrix of compressed, expanded graphite and phase change material (PCM) which is introduced into this matrix, by vacuum impregnation of the matrix with the PCM, **characterized in that** the matrix, under atmospheric pressure and partially or completely immersed in a molten PCM, is fixed inside an impregnation vessel, and the impregnation vessel is then evacuated until the desired degree of loading of the matrix with the PCM has been achieved.

2. Process according to Claim 1, **characterized in that** the impregnation vessel is evacuated to a pressure which corresponds to the vapour pressure of the molten PCM.

3. Process according to Claim 1 and/or 2, **characterized in that** an impregnation vessel whose remaining gas space after filling approximately corresponds to the volume of the molten PCM is used.

4. Process according to at least one of Claims 1-3, **characterized in that** the vacuum impregnation is continued until the residual porosity of the accumulator composite is approximately 5% by volume.

5. Process according to at least one of Claims 1-4, **characterized in that** the vacuum impregnation is carried out over a period of up to approximately five days, preferably up to approximately four days.

6. Process according to at least one of Claims 1-5, **characterized in that** a PCM which undergoes a solid/liquid phase transition in the temperature range from -25°C to 150°C is used.

7. Process according to at least one of Claims 1-6, **characterized in that** the PCM used is water.

8. Process according to at least one of Claims 1-5, **characterized in that** the PCM used is at least one of the following components or a eutectic or congruently melting mixture of at least two of the following components:
CaBr₂, CaCl₂·6H₂O, CaCl₂, KF, KCl, KF·4H₂O, LiClO₃ 3H₂O, MgSO₄, MgCl₂, ZnCl₂·2,5H₂O, ZnSO₄, Ba(OH)₂, H₂O, SO₃·2H₂O, NaCl, NaF, NaOH, NaOH·3,5H₂O, Na₂HPO₄, Na₂SO₄, Na₂SO₄·10H₂O, NH₄Cl, NH₄H₂PO₄, NH₄HCO₃, NH₄NO₃, NH₄F, (NH₄)₂SO₄, Al(NO₃)₂, Ca(NO₃)₂, Cd(NO₃)₂, KNO₃, LiNO₃, Mg(NO₃)₂, Mg (NO₃)·6H₂O, NaNO₃, Ni (NO₃)₂, Zn(NO₃)₂, Zn(NO₃)₂·6H₂O, Cu(NO₃)₂, acetic acid, acetates.

9. Process according to at least one of Claims 1-8, **characterized in that** the PCM used is a eutectic mixture of LiNO₃ and Mg(NO₃)₂·6H₂O.

10. Process according to at least one of Claims 1-9, **characterized in that** a graphite matrix with a density of 75-1500 g/l, preferably 75-300 g/l, particularly preferably of approximately 200 g/l, is used.

## Revendications

1. Procédé de préparation d'un composite accumulateur, pour accumuler de la chaleur ou du froid à partir d'une matrice constituée de graphite expansé comprimé et d'un matériau de changement de phase (PCM) qui y est incorporé, par imprégnation sous vide du PCM dans la matrice, **caractérisé en ce que** la matrice est fixée sous la pression normale, par immersion partielle ou complète dans une masse fondue de PCM à l'intérieur d'un récipient d'imprégnation, ce après quoi on fait le vide dans 1c récipient d'imprégnation, jusqu'à arriver à la charge souhaitée de la matrice en le PCM.

2. Procédé selon la revendication 1, **caractérisé en ce qu'**on fait le vide dans le récipient d'imprégnation, jusqu'à une pression correspondant à la pression de vapeur de la masse fondue de PCM.

3. Procédé selon la revendication 1 et/ou 2, **caractérisé en ce qu'**on utilise un récipient d'imprégnation dont l'espace gazeux résiduel correspond, après le chargement, approximativement au volume de la masse fondue de PCM.

4. Procédé selon au moins l'une des revendications 1 à 3, **caractérisé en ce qu'**on procède à l'imprégnation sous vide jusqu'à ce que la porosité résiduelle du composite accumulateur soit d'environ 5 % en volume.

5. Procédé selon au moins l'une des revendications 1 à 4, **caractérisé en ce que** l'imprégnation sous vide est mise en oeuvre pendant un laps de temps allant jusqu'à environ 5 jours, de préférence jusqu'à environ 4 jours.

6. Procédé selon au moins l'une des revendications 1 à 5, **caractérisé en ce qu'**on utilise un PCM qui présente une transition de phases solide/liquide dans la plage de températures de -25 à 150°C.

7. Procédé selon au moins l'une des revendications 1 à 6, **caractérisé en ce que** le PCM utilisé est l'eau.

8. Procédé selon au moins l'une des revendications 1 à 5, **caractérisé en ce qu'**on utilise en tant que PCM au moins l'un des composants ci-après, ou un mélange eutectique, ou à fusion congruente, d'au moins deux des composants suivants :
CaBr₂, CaCl₂.6H₂O, CaCl₂, KF, KCl, KF.4H₂O, LiClO₃.3H₂O, MgSO₄, MgCl₂, ZnCl₂.2,5H₂O, ZnSO₄, Ba(OH)₂.H₂O, SO₃.2H₂O, NaCl, NaF, NaOH, NaOH.3,5H₂O, Na₂HPO₄, Na₂SO₄, Na₂SO₄.10H₂O, NH₄Cl, NH₄H₂PO₄, NH₄HCO₃, NH₄NO₃, NH₄F, (NH₄)₂SO₄, Al(NO₃)₂, Ca (NO₃)₂, Cd(NO₃)₂, KNO₃, LiNO₃, Mg (NO₃)₂, Mg(NO₃).6H₂O, NaNO₃, Ni(NO₃)₂, Zn(NO₃)₂, Zn(NO₃)₂.6H₂O, Cu(NO₃)₂, acide acétique, acétates.

9. Procédé selon au moins l'une des revendications 1 à 8, **caractérisé en ce qu'**on utilise en tant que PCM un mélange eutectique de LiNO₃ et de Mg(NO₃)₂.6H₂O.

10. Procédé selon au moins l'une des revendications 1 à 9, **caractérisé en ce qu'**on utilise une matrice de graphite ayant une masse volumique de 75 à 1500 g/l, de préférence de 75 à 300 g/l, plus particulièrement d'environ 200 g/l.
